# EUROPÄISCHE PATENTSCHRIFT

(11) **EP 0 587 131 B1**
(45) Veröffentlichungstag und Bekanntmachung des Hinweises auf die Patenterteilung: **23.04.1997**
(21) Anmeldenummer: 93114367.1
(22) Anmeldetag: 08.09.1993
(51) Int. Cl.: F16L 19/08, F16L 37/088, F16L 47/04, F16L 47/06, F16L 33/22

(54) **Einsteckkupplung für die Verbindung von zwei Kunststoffrohren**
Socket and spigot coupling for the connection of two plastic pipes
Raccordement par emboîtement pour l'accouplement de deux tuyaux en matière plastique

(30) Priorität: 11.09.1992 DE 9212228 U; 21.11.1992 DE 4239250
(43) Veröffentlichungstag der Anmeldung: 16.03.1994
(73) Patentinhaber: Dipl.-Ing. Dr. Ernst Vogelsang GmbH & Co. KG, D-45699 Herten (DE)
(72) Erfinder: Vogelsang, Horst, D-45699 Herten (DE)
(74) Vertreter: Honke, Manfred, Dr.-Ing.

(56) Entgegenhaltungen:
- DE-A- 2 439 100
- DE-A- 3 325 350
- GB-A- 2 174 468
- GB-A- 2 258 895
- US-A- 3 920 270

## Beschreibung

Die Erfindung betrifft eine Einsteckkupplung für die Verbindung von zwei Kunststoffrohren, welche Kunststoffrohre Einsteckenden in die Einsteckkupplung eingeführt werden, - mit einer an gegenüberliegenden Stirnrändern offenen Kupplungsmuffe, jeweils einer Klemmvorrichtung in den Endbereichen der Kupplungsmuffe und in Einschubrichtung der Einsteckenden hinter der Klemmvorrichtung angeordneten Lippendichtungseinrichtungen, wobei die Klemmvorrichtung und die Lippendichtungseinrichtung in einer Auskammerung der Kupplungsmuffe angeordnet sind, wobei die Klemmvorrichtung einen mit einem Funktionsschlitz versehenen Stahlklemmring aufweist, der außenumfangsseitig eine Klemm-Konusausbildung und innenumfangsseitig zumindest eine Klemmrippe aufweist.

Bei einer bekannten Einsteckkupplung der eingangs beschriebenen Gattung (US-A 39 20 270) ist der geschlitzte Stahlklemmring in einer Auskammerung mit rechteckigem Querschnitt untergebracht. Der Innenumfang der Endbereiche der Kupplungsmuffe ist erheblich größer als der Außenumfang der darin einzusteckenden Einsteckenden, so daß der Stahlklemmring, wenn er über das Einsteckende gespannt ist, mit seinem schmaleren Konusende in den Spalt zwischen dem Einsteckende und dem Innenumfang der Kupplungsmuffe eingreift. Wird das Einsteckende durch Zugkräfte belastet, so kann sich das schmalere Konusende des Stahlklemmrings nur an der Kante der Auskammerung abstützen, so daß sowohl an der Kante als auch am daran abgestützten Bereich des Klemmringes große Flächenpressungen und Spannungsschlitze entstehen, die auch Auswirkungen auf das aus Kunststoffmaterial bestehende Einsteckende haben können. Weil der Innenumfang des Endbereiches der Kupplungsmuffe einen wesentlich größeren Durchmesser aufweist als der Außenumfang des Einsteckendes, ist auch die Abdichtung bei der bekannten Ausführung unbefriedigend. Die Lippendichtungseinrichtung ist nämlich in einer Auskammerung mit rechteckigem bis quadratischem Querschnitt untergebracht. Dabei kann nicht ausgeschlossen werden, daß insbesondere beim Einführen des Einsteckendes, aber auch bei späteren Relativbewegungen zwischen Einsteckende und Kupplungsmuffe die Lippendichtung aus ihrer Auskammerung gleichsam herausgerollt wird. Die Abdichtung ist deshalb nicht besonders zuverlässig.

Bei einer anderen bekannten Ausführung (DE-A 24 39 100) ist in der Auskammerung für den Stahlklemmring auch eine Dichtung angeordnet. Der Stahlklemmring wird mit Hilfe einer Überwurfmutter in seine Auskammerung gepreßt. Dabei wird auch die Dichtung zusammengepreßt. Da die Dichtung üblicherweise aus nachgiebigem Material besteht, wird sie entsprechend verformt. Es besteht also eine funktionelle Abhängigkeit zwischen der Wirkung der Dichtung einerseits und derjenigen des Stahlklemmrings andererseits. Es kann nicht ausgeschlossen werden, daß bei nur lose angezogener Überwurfmutter die Wirkung des Stahlklemmringes auf das eingeschobene Einsteckende unbefriedigend ist, oder bei zu fest angezogener Überwurfmutter die Dichtung durch zu starke Verformung beschädigt oder sogar aus ihrem Dichtungssitz herausgequetscht wird.

Der Erfindung liegt die Aufgabe zugrunde, eine Einsteckkupplung anzugeben, bei der ein eingeführtes Einsteckende nicht nur gegen Entkuppeln gesichert, sondern auch zuverlässig abgedichtet ist.

Diese Aufgabe wird gelöst durch die Kombination der folgenden Merkmale:
1.1) Der Stahlklemmring ist in eine stirnrandseitig offene Klemmringaufnahme eingesetzt, die einen Klemm-Gegenkonus aufweist,
1.2) der in der stirnrandseitig offenen Klemmringaufnahme angeordnete Stahlklemmring wird mit Hilfe einer auf das entsprechende Endteil der Kupplungsmuffe aufgeschraubten ringförmigen Überwurfmutter in der Klemmringaufnahme festgehalten,
1.3) die Lippendichtung besteht aus einem trapezförmigen Tragring und einer angeformten, in Einschubrichtung vom Tragring vorkragenden Dichtungslippe und ist einer Auskammerung angeordnet, die eine Aufnahmerille sowie eine Anlegefläche aufweist, der Tragring ist in diese Aufnahmerille eingesetzt und die Dichtungslippe liegt an der Anlagefläche an,
1.4) wobei ein eingeführtes Einsteckende gegen Zurückziehen durch eine rückzugsreibungsbedingte Wechselwirkung der Klemm-Konusausbildung mit der Klemm-Gegenkonusausbildung festgeklemmt wird.

Die erfindungsgemäße Einsteckkupplung ermöglicht eine bessere Abstimmung von Klemmkonus und Gegen-Klemmkonus nach Maßgabe der jeweiligen Verhältnisse. Außerdem kann die Differenz zwischen dem Innenumfang im Endbereich der Kupplungsmuffe einerseits und dem Außenumfang des Einsteckendes andererseits geringer werden, das heißt es kann mit kleineren Toleranzen gearbeitet werden. Im Hinblick auf die Abdichtung ist wesentlich die vom Tragring vorkragende Dichtungslippe. Der Tragring wird nämlich auch dann in seiner Auskammerung gehalten, wenn die Dichtungslippe beim Einführen des Einsteckendes durch Zugkräfte belastet wird. Im übrigen findet die eigentliche Abdichtung nicht im Bereich des Tragringes, sondern mit axialem Abstand davon im Bereich der Anlagefläche statt, an der die Dichtungslippe anliegt. Somit ist auch sichergestellt, daß die Lippendichtungseinrichtung weder beim Einführen des Einsteckendes noch bei Relativbewegungen zwischen Kupplungsmuffe und Einsteckende versagt.

Vorzugsweise weist die Klemmrippe einen widerhakenähnlichen Querschnitt auf. Dadurch wird ein eingeschobenes Einsteckende mit der widerhakenähnlichen Ausbildung sehr sicher festgehalten. Der Funktionsschlitz in dem Stahlklemmring kann parallel zur Längsachse der Einsteckkupplung verlaufen. Insbesondere, wenn innenumfangsseitig mehrere Klemmrippen in dem Stahlklemmring übereinander angeordnet sind, ist es zweckmäßig, daß der Stahlklemmring einen schräg, mit einem Winkel von etwa 45° zur Längsachse der Einsteckkupplung verlaufenden Funktionsschlitz aufweist. Dann wird das Einsteckende über den ganzen oder aber fast den ganzen Innenumfang des Stahlklemmringes von Klemmrippen beaufschlagt. Eine bevorzugte Ausführungsform der Erfindung ist dadurch gekennzeichnet, daß mindestens ein Stirnrand der Kupplungsmuffe eine umlaufende kupplungsmuffeninnenseitig ausgebildete Abwinklung von etwa 45° aufweist. Dadurch ist ein Stahlklemmring besonders einfach in eine stirnrandseitig offene Klemmringaufnahme einsetzbar.

Nach einer bevorzugten Ausführungsform der Erfindung, die sich durch fertigungstechnische Einfachheit auszeichnet, ist die Anordnung so getroffen, daß der in der stirnrandseitig offenen Klemmringaufnahme angeordnete Klemm-Gegenkonus an einem Klemm-Gegenkonusring ausgebildet und mit dem Stahlklemmring in die randseitig offene Klemmringaufnahme eingesetzt ist. Die Überwurfmutter besitzt zweckmäßigerweise einen Anschlagbund für den in der randseitig offenen Klemmringaufnahme angeordneten Stahlklemmring bzw. für den Klemm-Gegenkonusring.

Wird die Überwurfmutter gelöst, so ist auch die Kupplungsverbindung eines eingeschobenen Einsteckendes in der Einsteckkupplung lösbar. Das an dieser Seite mit dem Einsteckende eingeschobene Kunststoffrohr kann aus der Einsteckkupplung herausgezogen werden. Das ist bei der Ausführungsform für Kabelschutzrohre zum Einziehen der Kabel hilfreich, jedoch auch bei Einsteckkupplungen, die nicht für Kabelführungsrohre bestimmt sind, vorteilhaft. Ist an dem Stirnrand der Kupplungsmuffe eine umlaufende kupplungsmuffeninnenseitig ausgebildete Abwinklung von etwa 45° vorgesehen, so ermöglicht diese, daß ein herangezogenes Kunststoffrohr mit einem aufsitzenden Stahlklemmring bzw. Klemm-Gegenkonusring einfach und ohne Zusatzmaßnahmen wieder einführbar ist.

Eine weitere Ausführungsform, der im Rahmen der Erfindung besondere Bedeutung zukommt, ist dadurch gekennzeichnet, daß der Stahlklemmring bei aufgeschraubter Überwurfmutter und ohne eingeführtes Einsteckende mit bezüglich der Einsteckkupplung axialem und radialem Spiel in der Klemmringaufnahme angeordnet ist und durch ein eingeführtes Einsteckende der Stahlklemmring aufweitbar und bei Beaufschlagung des Einsteckendes mit einer Zugkraft der Stahlklemmring in dem Klemm-Gegenkonus festklemmbar ist. Diese besondere Ausführungsform hat den Vorteil, daß das Einsteckende auch bei aufgeschraubter Überwurfmutter in die Einsteckkupplung einführbar ist und die Überwurfmutter lediglich zum Lösen einer Kupplungsverbindung eines eingeschobenen Einsteckendes in der Einsteckkupplung abgeschraubt werden muß. Ist bei dieser Ausführungsform der Klemm-Gegenkonus an einem Klemm-Gegenkonusring ausgebildet, der mit dem Stahlklemmring in die randseitig offene Klemmringaufnahme eingesetzt wird, so ist die Klemmringaufnahme zweckmäßigerweise in zwei bezüglich der Längsrichtung der Einsteckkupplung übereinanderliegende Teilabschnitte für den Stahklemmring und den Klemm-Gegenkonusring aufgeteilt. Der obere Teilabschnitt für den Klemm-Gegenkonusring ist von dem unteren Teilabschnitt durch einen umlaufenden Absatz getrennt, auf dem der Klemm-Gegenkonusring über dem Stahlklemmring aufliegt, so daß der Stahlklemmring ein bezüglich der Längsachse der Einsteckkupplung axiales Spiel aufweist. Zweckmäßigerweise weist bei dieser Ausführungsform der Stahlklemmring unterhalb der außenumfangsseitigen Klemm-Konusausbildung einen zylinderförmigen Abschnitt auf. Dieser ermöglicht es, daß in dem zugeordneten Teilabschnitt der Klemmringaufnahme die Wanddicke der Kupplungsmuffe nicht zu sehr reduziert wird.

Im folgenden wird die Erfindung anhand einer lediglich ein Ausführungsbeispiel darstellenden Zeichnung ausführlicher erläutert. Es zeigen in schematischer Darstellung
- Fig. 1: Die Ansicht einer Ausführungsform einer Einsteckkupplung mit im Schnitt dargestellter Überwurfmutter, im Schnitt dargestellten Stahlklemmring und im Schnitt dargestellten Klemm-Gegenkonusring, Überwurfmutter, Stahlklemmring und Klemm-Gegenkonusring, abgezogen,
- Fig. 2: in gegenüber der Fig. 1 wesentlich vergrößerter Darstellung einen Längsschnitt durch eine Einsteckkupplung mit eingelegten Stahlklemmringen und eingelegtem Klemm-Gegenkonusring, mit eingestecktem Kunststoffrohr,
- Fig. 3: den vergrößerten Ausschnitt A aus dem Gegenstand nach Fig. 2,
- Fig. 4: den vergrößerten Ausschnitt B aus dem Gegenstand nach Fig. 2,
- Fig. 5: entsprechend der Fig. 2 in vergrößerter Darstellung einen Längsschnitt durch eine Ausführungsform einer erfindungsgemäßen Einsteckkupplung mit eingelegten Stahlklemmringen und eingelegtem Klemm-Gegenkonusring, aber ohne eingestecktes Kunststoffrohr,
- Fig. 6: den vergrößerten Ausschnitt C aus dem Gegenstand nach Fig. 5,
- Fig. 7: einen Stahlklemmring für die erfindungsgemäße Einsteckkupplung in perspektivischer Sicht.

Die in den Figuren dargestellte Einsteckkupplung 1 ist für die Verbindung von zwei Kunststoffrohren bestimmt. Insbesondere mag es sich um die Verbindung von zwei erdverlegten Kabelführungsrohren handeln. Zum grundsätzlichen Aufbau der Einsteckkupplung 1 gehören eine an gegenüberliegenden Stirnrändern offene Kupplungsmuffe 2 und jeweils eine Klemmvorrichtung 3 bzw. 4 in den Endbereichen der Kupplungsmuffe 2. Im übrigen sind weiter unten erläuterte Betätigungseinrichtungen für die Klemmvorrichtungen vorgesehen.

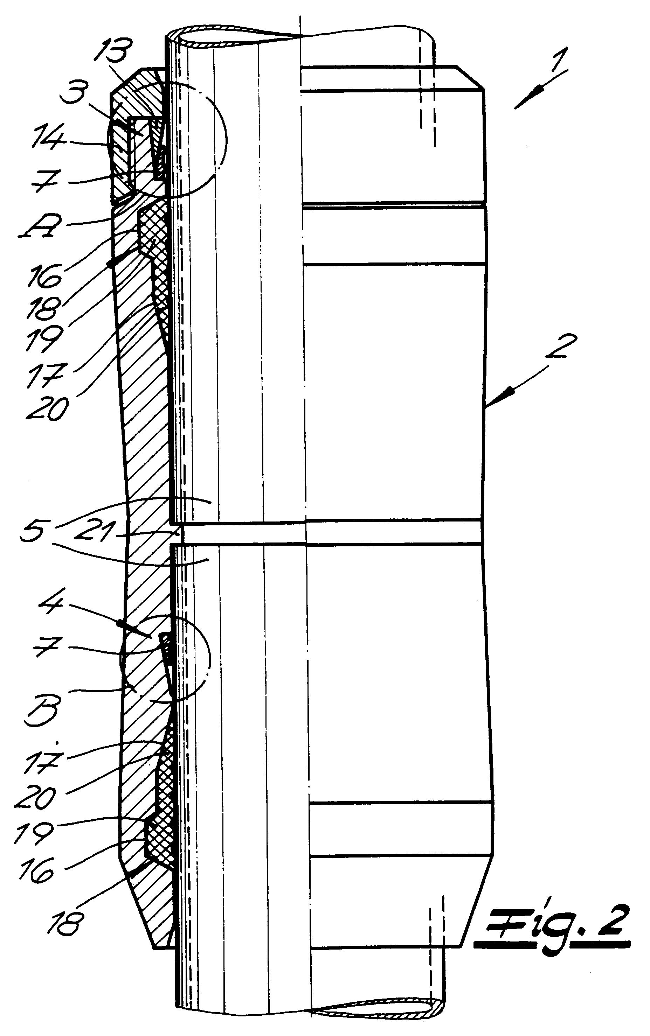

Die zu verbindenden Kunststoffrohre werden mit glatten Einsteckenden 5 in die Endbereiche der Kupplungsmuffe 2 eingesteckt, was in der Fig. 2 angedeutet wurde. Die Einsteckenden 5 sind im eingeschobenen Zustand durch die Klemmvorrichtung 3 bzw. 4 festsetzbar. Die Klemmvorrichtungen 3 bzw. 4 weisen jeweils einen mit einem Funktionsschlitz 6 versehenen Stahlklemmring 7 auf, der außenumfangsseitig eine Klemm-Konusausbildung 8 und innenumfangssetitig zumindest eine Klemmrippe 9 aufweist. Hierzu wird auch auf die Fig. 7 verwiesen.

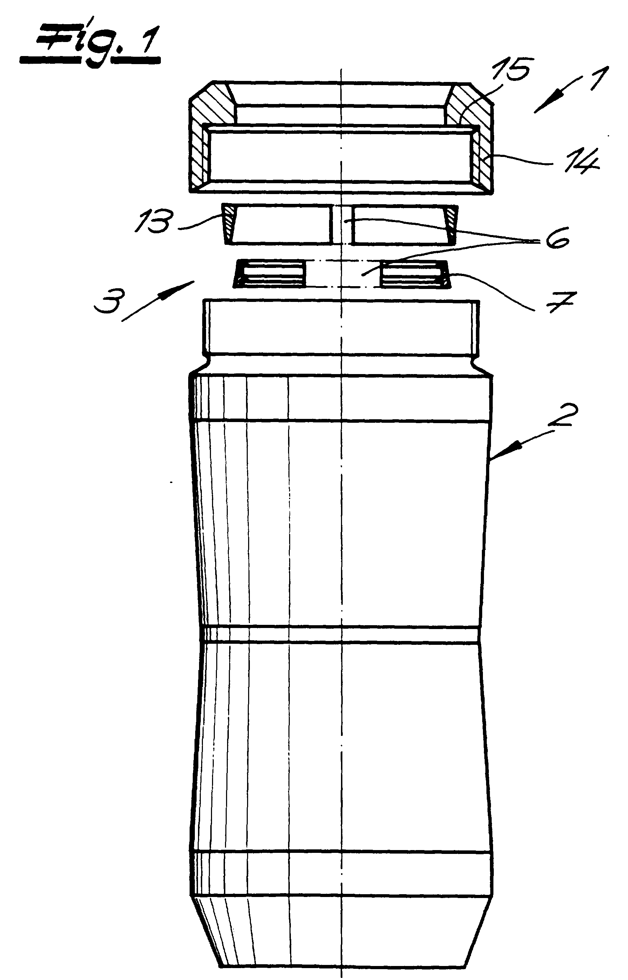

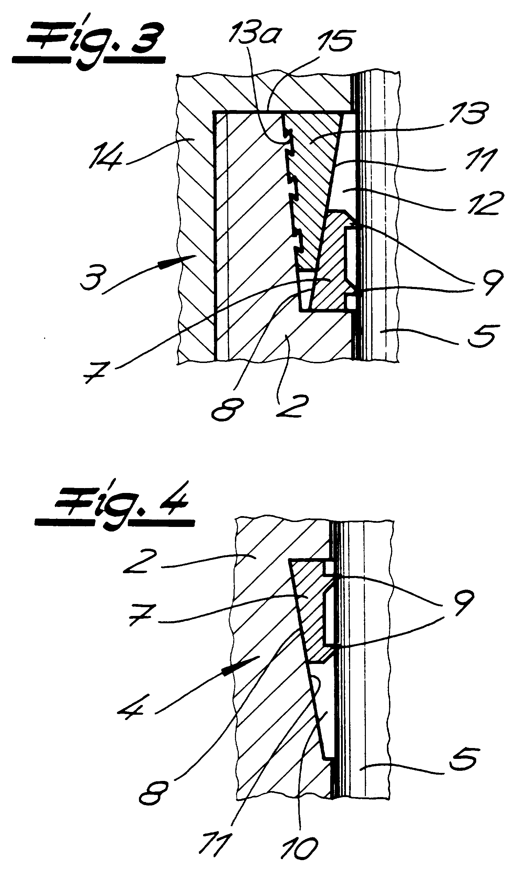

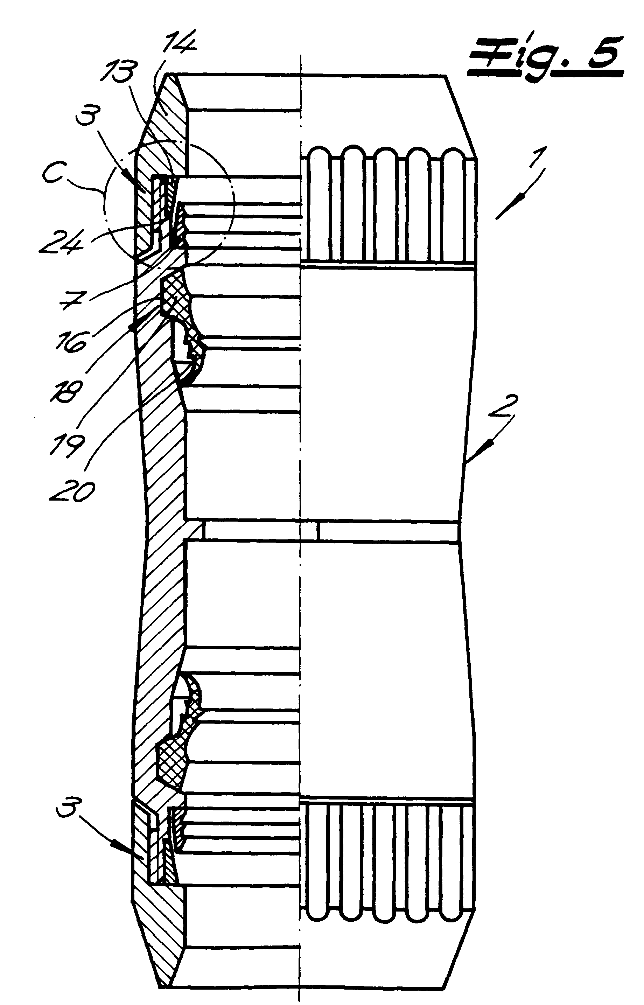

In den Fig. 1 bis 4 ist eine Ausführungsform der erfindungsgemäßen Einsteckkupplung dargestellt, bei der die eine Seite der Einsteckkupplung entsprechend dem Vorbild der Erfindung ausgebildet ist und bei der die andere Seite der Einsteckkupplung auf andere Weise ausgebildet ist. Bei dieser Ausführungsform ist der eine Stahlklemmring 7 in eine von dem zugeordneten Stirnrand entfernte erste Klemmringaufnahme 10 eingesetzt, die an der Innenwand der Kupplungsmuffe 2 ausgeformt ist und eine Klemm-Gegenkonusausbidlung 11 aufweist. Der andere Stahlklemmring 7 ist in eine am gegenüberliegenden Endbereich der Kupplungsmuffe 2 angeordnete stirnrandseitige offene zweite Klemmringaufnahme 12 eingesetzt, die mit einem Klemm-Gegenkonus 11 zusammenwirkt, der an einem Klemm-Gegenkonusring 13 ausgebildet ist. Der Stahklemmring 7 ist mit dem Klemm-Gegenkonusring 13 in die randseitig offene Klemmringaufnahme 12 einsetzbar. Die Anordnung ist so getroffen, daß der in der ersten Klemmringaufnahme 10 angeordnete Stahlklemmring 7 ein eingeführtes Einsteckende 5 gegen Zurückziehen durch rückzugsreibungsbedingte Wechselwirkung der Klemm-Konusausbildung 8 mit der Klemm-Gegenkonusausbildung 11 festklemmt. Die Anordnung ist fernerhin so getroffen, daß der in der zweiten, stirnseitig randoffenen Klemmringaufnahme 12 angeordnete Stahlklemmring 7 mit Hilfe einer auf das entsprechende Endteil der Kupplungsmuffe 2 aufgeschraubten ringförmigen Überwurfmutter in der Klemmringaufnahme 12 festgehalten ist, so daß in diesem Zustand ein eingeführtes Einsteckende 5 gegen Zurückziehen durch eine rückzugsreibungsbedingte Wechselwirkung der Klemm-Konusausbildung 8 mit der Klemm-Gegenkonusausbildung 11 an dem Klemm-Gegenkonusring 13 festklemmt. Die Überwurfmutter 14 besitzt im Ausführungsbeispiel einen Anschlagbund 15 für den in der randseitig offenen Klemmringaufnahme 12 angeordneten Klemm-Gegenkonusring 13. Der Stahlklemmring 7 und der Klemm-Gegenkonusring 13 werden durch das Aufschrauben der Überwurfmutter 14 verspannt. - Auf die Verspannung kann man verzichten, wenn man die Formschlußausbildungen 13a verwirklicht, die in Fig. 3 angedeutet sind.

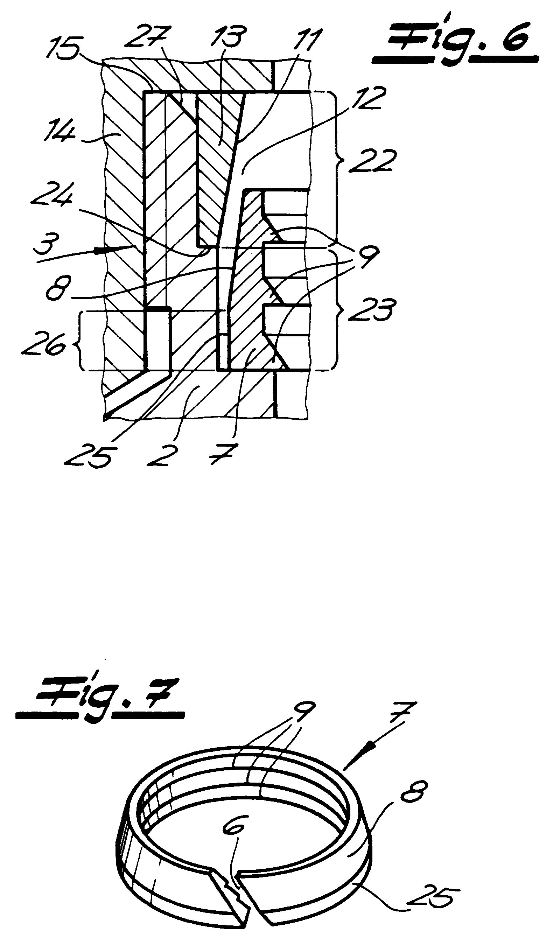

In den Fig. 5 und 6 ist eine Ausführungsform der erfindungsgemäßen Einsteckkupplung dargestellt, der besondere Bedeutung zukommt, bei der die beiden Enden der Einsteckkupplung entsprechend dem Patentanspruch 8 ausgebildet sind. Diese Ausführungsform zeichnet sich durch die Kombination der folgenden Merkmale aus:

In den beiden Endbereichen der Kupplungsmuffe 2 ist jeweils ein Stahlklemmring 7 in eine stirnrandseitig offene Klemmringaufnahme 12 eingesetzt, die mit einem Klemm-Gegenkonusring 13 ausgebildet ist. Der Stahlklemmring 7 ist zusammen mit dem über ihm liegenden Klemm-Gegenkonusring 13 in die randseitig offene Klemmringaufnahme 12 eingesetzt. Der Stahlklemmring 7 und der Klemm-Gegenkonusring 13 werden mit Hilfe einer auf das Endteil der Kupplunsmuffe 2 aufgeschraubten ringförmigen Überwurfmutter 14 in der Klemmringaufnahme 12 festgehalten. Die Überwurfmutter 14 besitzt im Ausführungsbeispiel einen Anschlagbund 15 für den Klemm-Gegenkonusring 13. Ein eingeführtes Einsteckende 5 ist gegen Zurückziehen durch eine rückzugsreibungsbedingte Wechselwirkung der Klemm-Konusausbildung 8 mit der Klemm-Gegenkonusausbildung 11, an dem Klemm-Gegenkonusring 13 festklemmbar. Dabei zeichnet sich diese Ausführungsform dadurch aus, daß der Stahlklemmring 7 bei aufgeschraubter Überwurfmutter 14 und ohne eingeführtes Einsteckende 5 mit bezüglich der Einsteckkupplung 1 axialem und radialem Spiel in der Klemmringaufnahme 12 angeordnet ist und durch ein eingeführtes Einsteckende 5 der Stahlklemmring 7 aufweitbar und bei Beaufschlagung des Einsteckendes 5 mit einer Zugkraft der Stahlklemmring 7 in dem Klemm-Gegenkonus 11 festklemmbar ist. Durch diese Zugkraft wird der Stahlklemmring 7 in den an dem Anschlagbund 15 der Überwurfmutter 14 anschlagenden Klemm-Gegenkonusring 13 gezogen und die Klemm-Konusaubildung 8 des Stahlklemmringes 7 wird dadurch in der Klemm-Gegenkonusausbildung 11 an den Klemm-Gegenkonusring 13 festgeklemmt. Die Klemmringaufnahme 12 ist im Ausführungsbeispiel in zwei bezüglich in Längsrichtung der Einsteckkupplung 1 übereinanderliegende Teilabschnitte 22, 23 für den Stahlklemmring 7 und den Klemm-Gegenkonusring 13 aufgeteilt. Der obere Teilabschnitt 22 für den Klemm-Gegenkonusring 13 ist von dem unteren Teilabschnitt 23 durch einen umlaufenden Absatz 24 getrennt, auf dem der Klemm-Gegenkonusring 13 über dem Stahlklemmring 7 aufliegt, so daß der Stahlklemmring 7 ein bezüglich der Längsachse der Einsteckkupplung 1 axiales Spiel aufweist. Im Ausführungsbeispiel weist der Stahlklemmring 7 unterhalb der außenumfangsseitigen Klemm-Konusausbildung 8 einen zylinderförmigen Abschnitt 25 auf. Ein derartiger Stahlklemmring ist auch in der Fig. 7 dargestellt. Dieser ermöglicht es, daß in dem zugeordneten Abschnitt 26 der Klemmringaufnahme 12 die Wanddicke der Kupplungsmuffe 2 nicht zu sehr reduziert werden muß.

In den Fig. 3, 4 und 6 erkennt man, daß die Klemmrippen 9 einen widerhakenähnlichen Querschnitt aufweist. Aus der Fig. 7 entnimmt man, daß der Stahlklemmring 7 vorzugsweise einen schräg, mit einem Winkel von etwa 45° zur Längsachse der Einsteckkupplung 1 verlaufenden Funktionsschlitz 6 aufweist. Dieser gewährleistet, wie oben erläutert, einen besonders festen Halt des Stahlklemmringes 7 an dem Einsteckende 5. In der Fig. 5 ist erkennbar, daß in diesem Ausführungsbeispiel die beiden Stirnränder der Kupplungsmuffe 2 eine umlaufende, kupplungsmuffeninnenseitig ausgebildete Abwinklung 27 von etwa 45° aufweisen.

In den Fig. 2 und 5 erkennt man, daß in den Endbereichen der Kupplungsmuffe 2 in Einsteckrichtung der Einsteckenden 5 vor bzw. hinter der Klemmringaufnahme 10 bzw. 12 Aufnahmerillen 16 und Anlagefläche 17 für eine Lippendichtung 18 angeordnet sind, die aus einem im Querschnitt trapezförmigen Tragring 19 und einer angeformten Dichtungsrippe 20 bestehen. Der Tragring 19 ist in die Aufnahmerille 16 eingesetzt. Im Bereich der Mitte der Einsteckkupplung 1 erkennt man im übrigen eine Anschlagausbildung 21 für die Einsteckenden 5. Die Lippendichtung 18 erlaubt es, die erfindungsgemäße Einsteckkupplung 1 auch im Zusammenhang mit druckführenden oder unterdruckführenden Rohrleitungen einzusetzen. - Es versteht sich, daß die eingesteckten Rohrenden in der Einsteckkupplung 1 auch um ihre Achse gedreht werden können.

## Patentansprüche

1. Einsteckkupplung (1) für die Verbidung von zwei Kunststoffrohren, welche Kunststoffrohre mit Einsteckenden (5) in die Einsteckkupplung (2) eingeführt werden, - mit
einer an gegenüberliegenden Stirnrändern offenen Kupplungsmuffe (2),
jeweils einer Klemmvorrichtung (3) in den Endbereichen der Kupplungsmuffe (2) und
in Einschubrichtung der Einsteckenden hinter der Klemmvorrichtung (3) angeordneten Lippendichtungseinrichtungen (18),
wobei die Klemmvorrichtung (3) und die Lippendichtungseinrichtung (18) in einer Auskammerung (16, 17) der Kupplungsmuffe (2) angeordnet sind, wobei die Klemmvorrichtung (3) einen mit einem Funktionsschlitz (6) versehenen Stahlklemmring (7) aufweist, der außenumfangsseitig eine Klemm-Konusausbildung (8) und innenumfangsseitig zumindest eine Klemmrippe (9) aufweist, **gekennzeichnet durch** die folgenden Merkmale:
1.1) Der Stahlklemmring (7) ist in eine stirnrandseitig offene Klemmringaufnahme (12) eingesetzt, die einen Klemm-Gegenkonus (11) aufweist,
1.2) der in der stirnrandseitig offenen Klemmringaufnahme (10) angeordnete Stahlklemmring (7) wird mit Hilfe einer auf das entsprechende Endteil der Kupplungsmuffe (2) aufgeschraubten ringförmigen Überwurfmutter (14) in der Klemmringaufnahme (12) festgehalten,
1.3) die Lippendichtung (18) besteht aus einem trapezförmigen Tragring (19) und einer angeformten, in Einschubrichtung vom Tragring (19) vorkragenden Dichtungslippe (20) und ist in einer Auskammerung angeordnet, die eine Aufnahmerille (16) sowie eine Anlagefläche (17) aufweist, der Tragring (19) ist in die Aufnahmerille (16) eingesetzt und die Dichtungslippe (20) liegt an der Anlagefläche (17) an,
wobei ein eingeführtes Einsteckende (5) gegen Zurückziehen durch eine rückzugsreibungsbedingte Wechselwirkung der Klemm-Konusausbildung (8) mit der Klemm-Gegenkonusausbildung (11) festgeklemmt wird.

2. Einsteckkupplung nach Anspruch 1, wobei die Klemmrippe (9) einen widerhakenähnlichen Querschnitt aufweist.

3. Einsteckkupplung nach Anspruch 1 oder 2, wobei der Stahlklemmring (7) einen schräg, mit einem Winkel von etwa 45° zur Längsachse der Einsteckkupplung (1) verlaufenden Funktionsschlitz (6) aufweist.

4. Einsteckkupplung nach einem der Ansprüche 1 bis 3, wobei mindestens ein Stirnrand der Kupplungsmuffe (2) eine umlaufende, kupplungsmuffeninnenseitig ausgebildete Abwinkelung (27) von etwa 45° aufweist.

5. Einsteckkupplung nach einem der Ansprüche 1 bis 4, wobei der in der stirnrandseitig offenen Klemmringaufnahme (12) angeordnete Klemm-Gegenkonus (11) an einem Klemm-Gegenkonusring (13) ausgebildet und mit dem Stahlklemmring (7) in die randseitig offene Klemmringaufnahme (12) eingesetzt ist.

6. Einsteckkupplung nach einem der Ansprüche 1 bis 5, wobei die Überwurfmutter (14) einen Anschlagbund (15) für den in der randseitig offenen Klemmringaufnahme (12) angeordneten Stahlklemmring (7) bzw. den Klemm-Gegenkonus (13) aufweist.

7. Einsteckkupplung nach einem der Ansprüche 1 bis 6, wobei der Stahlklemmring (7) und der Klemm-Gegenkonus (11) durch das Aufschrauben der Überwurfmutter (14) verspannbar sind.

8. Einsteckkupplung nach einem der Ansprüche 1 bis 6, wobei der Stahlklemmring (7) bei aufgeschraubter Überwurfmutter (14) und ohne eingeführtes Einsteckende (5) mit bezüglich der Einsteckkupplung (1) axialem und radialem Spiel in der Klemmringaufnahme (12) angeordnet ist und durch ein eingeführtes Einsteckende (5) der Stahlklemmring (7) aufweitbar und bei Beaufschlagung des Einsteckendes (5) mit einer Zugkraft der Stahlklemmring (7) in dem Klemm-Gegenkonus (11) festklemmbar ist.

9. Einsteckkupplung nach Anspruch 8, wobei der Stahlklemmring (7) unterhalb der außenumfangsseitigen Klemm-Konusausbildung (8) einen zylinderförmigen Abschnitt (25) aufweist.

10. Einsteckkupplung nach einem der Ansprüche 8 oder 9, wobei die Ausführungsform nach dem Anspruch 8 an beiden Enden der Einsteckkupplung verwirklicht ist.

11. Einsteckkupplung nach einem der Ansprüche 1 bis 10. wobei im Bereich der Mitte der Einsteckkupplung (1) eine Anschlagausbildung (21) für die Einsteckenden (5) angeordnet ist.

## Claims

1. An insertion coupling (1) for joining two plastic pipes, insertion ends (5) of which plastic pipes are introduced into the insertion coupling (2), - having
a coupling socket (2) which is open at its opposite end boundaries,
a clamping device (3) in each of the end regions of the coupling socket (2), and
lip seal devices (18) disposed behind the clamping device (3) in the direction of insertion of the insertion ends,
wherein the clamping device (3) and the lip seal device (18) are disposed in a recess (16, 17) in the coupling socket (2), wherein the clamping device (3) comprises a steel clamping ring (7), which is provided with a functional slot (6) and which has a clamping cone formation (8) on its external circumference and at least one clamping rib (9) on its internal circumference, characterised by the following features:
1.1) the steel clamping ring (7) is inserted in a clamping ring receiver (12) which is open at its end boundary and which comprises a clamping counter-cone (11),
1.2) the steel clamping ring (7) disposed in the clamping ring receiver (12) which is open at its end boundary is secured in the clamping ring receiver (12) with the aid of an annular coupling ring (14) which is screwed on to the corresponding end part of the coupling socket (2),
1.3) the lip seal (18) consists of a trapezoidal support ring (19) and of an integrally formed sealing lip (20) which projects from the support ring (19) in the direction of insertion, and is disposed in a recess which comprises a receiving groove (16) and a contact face (17), the support ring (19) is inserted in the receiving groove (16) and the sealing lip (20) is seated against the contact face (17),
wherein an insertion end (5) which is introduced is clamped against withdrawal by an interaction of the clamping cone formation (8) with the clamping counter-cone formation (11) which results from friction due to reverse motion.

2. An insertion coupling according to claim 1, wherein the clamping rib (9) has a barblike cross-section.

3. An insertion coupling according to claim 1 or 2, wherein the steel clamping ring (7) has a functional slot (6) which extends at a slant, at an angle of about 45° to the longitudinal axis of the insertion coupling (1).

4. An insertion coupling according to any one of claims 1 to 3, wherein at least one end boundary of the coupling socket (2) has an encircling chamfer (27) of about 45° formed on the inside of the coupling socket.

5. An insertion coupling according to any one of claims 1 to 4, wherein the clamping counter-cone (11) disposed in the clamping ring receiver (12) which is open at its end boundary is formed on a clamping counter-cone ring (13) and is inserted with the steel clamping ring (7) into the clamping ring receiver (12) which is open at its boundary.

6. An insertion coupling according to any one of claims 1 to 5, wherein the coupling ring (14) has a stop collar (15) for the steel clamping ring (7) or for the clamping counter-cone (13) which is disposed in the clamping ring receiver (12) which is open at its boundary.

7. An insertion coupling according to any one of claims 1 to 6, wherein the steel clamping ring (7) and the clamping counter-cone (11) can be braced together by screwing on the coupling ring (14)..

8. An insertion coupling according to any one of claims 1 to 6, wherein, when the coupling ring (14) is screwed on and without the insertion end (5) introduced, the steel clamping ring (7) is disposed in the clamping ring receiver (12) with axial and radial play with respect to the insertion coupling (1) and the steel clamping ring (7) can be expanded by an insertion end (5) which is introduced, and the steel clamping ring (7) can be clamped in the clamping counter-cone (11) when the insertion end (5) is acted upon by a tensile force.

9. An insertion coupling according to claim 8, wherein the steel clamping ring (7) has a cylindrical section (25) below the clamping counter-cone formation (8) on its external circumference.

10. An insertion coupling according to either one of claims 8 or 9, wherein the form of construction according to claim 8 is put into effect at both ends of the insertion coupling.

11. An insertion coupling according to any one of claims 1 to 10, wherein a stop formation (21) for the insertion ends (5) is formed in the region of the middle of the insertion coupling (1).

## Revendications

1. Raccord à enfichage (1) pour réunir deux tuyaux en matière plastique, que l'on insère au moyen d'extrémités enfichables (5) dans le raccord à enfichage (2), - comportant
un manchon (2) ouvert au niveau de bords frontaux opposés, respectivement un dispositif de serrage (3) situé dans les parties d'extrémité du manchon (2) du raccord, et des dispositifs d'étanchéité à lèvre (18), disposés en arrière du dispositif de serrage (3) dans la direction d'insertion des extrémités enfichables,
et dans lequel le dispositif de serrage (3) et le dispositif d'étanchéité à lèvre (18) sont disposés dans un évidement (16,17) du manchon (2) du raccord, le dispositif de serrage (3) possédant une bague de serrage en acier (7), qui est pourvue d'une fente de fonctionnement (6) et possède, sur sa périphérie extérieure, une configuration conique de serrage (8) et, sur sa périphérie intérieure, au moins une nervure de serrage (9), caractérisé par les caractéristiques suivantes :
1.1) La bague de serrage en acier (7) est insérée dans un logement (12) pour cette bague, ouvert du côté du bord frontal et qui possède un cône antagoniste de serrage (11),
1.2) la bague de serrage en acier (7) disposée dans le logement (10) pour la bague de serrage, ouvert du côté du bord frontal, est maintenue fermement dans le logement (12) prévu pour la bague de serrage, à l'aide d'un écrou - raccord (14) de forme annulaire, vissé sur la partie d'extrémité correspondante du manchon (2) du raccord,
1.3) le dispositif d'étanchéité à lèvre (18) est constitué par un anneau de support de forme trapézoïdale (19) et une lèvre d'étanchéité moulée (20) qui fait saillie dans la direction d'enfichage de la bague de support (19) et est disposé dans un évidement, qui possède une rainure de logement (16) ainsi qu'une surface d'application (17), l'anneau de support (19), est inséré dans la rainure de logement (16) et la lèvre d'étanchéité (20) s'applique contre la surface d'application (17),
une extrémité enfichable introduite (5) étant serrée fermement d'une manière s'opposant à un retrait, grâce à une interaction provoquée par un frottement de retrait de la configuration conique de serrage (8) et de la configuration conique antagoniste de serrage (11).

2. Raccord à enfichage selon la revendication 1, dans lequel la nervure de serrage (9) possède une section transversale en forme de crochet.

3. Raccord à enfichage selon la revendication 1 ou 2, dans lequel la bague de serrage en acier (7) possède une fente de fonctionnement (6) qui s'étend obliquement en faisant un angle d'environ 45° par rapport à l'axe longitudinal du raccord à enfichage (1).

4. Raccord à enfichage selon l'une des revendications 1 à 3, dans lequel au moins un bord frontal du manchon (2) du raccord comporte un biseau circonférentiel (27) s'étendant approximativement à 45° et formé sur la face intérieure du manchon du raccord.

5. Raccord à enfichage selon l'une des revendications 1 à 4, dans lequel le cône antagoniste de serrage (11), disposé dans le logement (12) de la bague de serrage qui est ouvert du côté du bord frontal, est formé sur une bague formant cône antagoniste de serrage (13) et est inséré avec la bague de serrage en acier (7) dans le logement (12) de la bague de serrage, ouvert au niveau du bord.

6. Raccord à enfichage selon l'une des revendications 1 à 5, dans lequel l'écrou - raccord (14) comporte un collet de butée (15) pour la bague de serrage en acier (7) disposée dans le logement (12) pour la bague de serrage ouvert au niveau du bord, et le cône antagoniste de serrage (13).

7. Raccord à enfichage selon l'une des revendications 1 à 6, dans lequel la bague de serrage en acier (7) et le cône antagoniste de serrage (11) peuvent être serrés par vissage de l'écrou - raccord (14).

8. Raccord à enfichage selon l'une des revendications 1 à 6, dans lequel lorsque l'écrou - raccord (14) est vissé et que l'extrémité enfichable (5) n'est pas introduite, la bague de serrage en acier (7) est disposée avec un jeu axial et radial par rapport au raccord à enfichage (1), dans le logement (12) pour la bague de serrage et que la bague de serrage en acier (7) peut être élargie par une extrémité enfichable (5) introduite et peut être serrée fermement dans le cône antagoniste de serrage (11) lors de l'application d'une force de traction par la bague de serrage en acier (7) à l'extrémité enfichable (5).

9. Raccord à enfichage selon la revendication 8, dans lequel la bague de serrage en acier (7) possède une section de forme cylindrique (25) au-dessous de la configuration conique de serrage (8) située du côté de la circonférence extérieure.

10. Raccord à enfichage selon l'une des revendications 8 ou 9, dans lequel la forme de réalisation selon la revendication 8 est réalisée sur les deux extrémités du raccord à enfichage.

11. Raccord à enfichage selon l'une des revendications 1 à 10, dans lequel une configuration formant butée (21) pour les extrémités enfichables (5) est disposée dans la zone du centre du raccord à enfichage (1).
